# EUROPÄISCHE PATENTANMELDUNG

(11) **EP 0 841 039 A1**
(43) Veröffentlichungstag der Anmeldung: **13.05.1998**
(21) Anmeldenummer: 97117115.2
(22) Anmeldetag: 02.10.1997
(51) Int. Cl.: A61C 17/02, A61C 1/00

(54) **Überdruckventil für eine Munddusche**

(30) Priorität: 06.11.1996 DE 19645643
(71) Anmelder: Braun Aktiengesellschaft, Frankfurt am Main (DE)
(72) Erfinder: Sauer, Michael, 65520 Bad Camberg (DE); Schaefer, Norbert, 60322 Frankfurt (DE)

(57) **Zusammenfassung**

Es wird eine Munddusche zum Pflegen und Reinigen der Zähne und des Zahnfleischs beschrieben, die mit einer von einem Elektromotor antreibbaren Pumpe (1) versehen ist. Die Pumpe (1) weist einen insbesondere mit einem Flüssigkeitsbehälter verbundenen und mit einem Einlaßventil (8) versehenen Einlaß (2) auf, einen insbesondere mit einer Spritzdüse verbundenen und mit einem Auslaßventil (21) versehenen Auslaß (3) sowie einen mit dem Einlaß (2) und dem Auslaß (3) verbundenen Pumpenzylinder (5). In dem Pumpenzylinder (5) ist ein Kolben (4) hin- und herbewegbar, wodurch Flüssigkeit von dem Einlaß (2) in den Pumpenzylinder (5) angesaugt und danach die angesaugte Flüssigkeit aus dem Pumpenzylinder (5) zu dem Auslaß (3) gefördert werden kann. Das Einlaßventil (8) ist mit einem Überdruckventil (13) versehen, über das bei Überdruck Flüssigkeit von dem Pumpenzylinder (5) zum Einlaß (2) gelangen kann. Damit genügt es, an der Spritzdüse nur ein Absperrventil (25) zum Absperren des zur Spritzdüse gepumpten Wassers vorzusehen. Der elektrische Ein- und Ausschalter für die Pumpe (1) muß nicht zur Spritzdüse geführt werden, sondern kann am Gehäuse der Munddusche angeordnet werden.

## Beschreibung

Die Erfindung betrifft eine Vorrichtung zum Pflegen und Reinigen der Zähne und des Zahnfleischs mit einer von einem Elektromotor antreibbaren Pumpe, die einen insbesondere mit einem Flüssigkeitsbehälter verbundenen und mit einem Einlaßventil versehenen Einlaß, einen insbesondere mit einer Spritzdüse verbundenen und mit einem Auslaßventil versehenen Auslaß sowie einen mit dem Einlaß und dem Auslaß verbundenen Pumpenzylinder aufweist, in dem ein Kolben hin- und herbewegbar ist, wodurch Flüssigkeit von dem Einlaß in den Pumpenzylinder angesaugt und danach die angesaugte Flüssigkeit aus dem Pumpenzylinder zu dem Auslaß gefördert werden kann.

Eine derartige Vorrichtung ist aus der europäischen Patentanmeldung EP 85 795 A1 bekannt. Bei der dort beschriebenen Munddusche ist eine elektromotorisch angetriebene Pumpe mit einem Einlaß und einem Auslaß versehen. Der Einlaß ist mit einem Flüssigkeitsbehälter verbunden, in den Wasser eingefüllt werden kann, und der Auslaß der Pumpe ist über einen längeren Schlauch mit einer Spritzüse verbunden. Des weiteren ist der Einlaß mit einem Einlaßventil versehen und der Auslaß mit einem Auslaßventil. Zwischen dem Einlaß und dem Auslaß ist in der Pumpe ein Pumpenzylinder vorgesehen, in dem ein Kolben hin- und herbewegbar ist. Im eingeschalteten Betriebszustand der Munddusche wird Wasser aus dem Flüssigkeitsbehälter über den Einlaß der Pumpe angesaugt, um dann über den Auslaß der Pumpe zu der Spritzdüse gepumpt zu werden. Dabei ist das Auslaßventil bei der Saugbewegung des Kolbens geschlossen und das Wasser wird über das geöffnete Einlaßventil angesaugt. Bei der nachfolgenden Pumpbewegung des Kolbens ist umgekehrt das Einlaßventil geschlossen und das Wasser wird über das geöffnete Auslaßventil zur Spritzdüse gepumpt. Die Spritzdüse kann von einem Benutzer zum Mundraum geführt werden und der Benutzer kann dort mit dem austretenden Wasserstrahl die Zähne und das Zahnfleisch pflegen und reinigen.

Der elektrische Ein- und Ausschalter für die Pumpe ist in der Spritzdüse untergebracht. Zu diesem Zweck sind von dem Ein- und Ausschalter zwei elektrische Drähte im Innern des längeren Schlauchs zu dem die Pumpe antreibenden Elektromotor geführt. Der Benutzer kann also den Wasserstrahl dadurch in Gang setzen und wieder stoppen, daß er die Pumpe mittels des elektrischen Ein- und Ausschalters in der Spritzdüse vom ausgeschalteten in den eingeschalteten Betriebszustand überführt und umgekehrt.

Aufgabe der Erfindung ist es, die Vorrichtung der eingangs genannten Art insbesondere hinsichtlich einer vereinfachten Konstruktion und Herstellung weiterzuentwickeln.

Diese Aufgabe wird bei der Erfindung dadurch gelöst, daß das Einlaßventil ein Überdruckventil aufweist, über das bei Überdruck Flüssigkeit von dem Pumpenzylinder zum Einlaß gelangen kann.

Mit Hilfe der Erfindung ist es möglich, den Wasserstrahl nur durch ein Absperren des der Spritzdüse zugeführten Wassers in Gang zu setzen und wieder zu stoppen, ohne daß dabei die Pumpe ein- oder ausgeschaltet werden muß. Bei "eingeschaltetem" Wasserstrahl wird das Wasser, wie bisher, von der Pumpe zur Spritzdüse gepumpt. Im abgesperrten Zustand hingegen, also bei "ausgeschaltetem" Wasserstrahl, wird das Wasser statt zur Spritzdüse über das Überdruckventil zurück zum Einlaß gepumpt. Die Pumpe läuft dabei weiter. Eine Überlastung der Pumpe oder des Elektromotors findet nicht statt, da sich kein Überdruck in der Pumpe aufbaut, sondern das Wasser über das Überdruckventil zurück zum Einlaß gelangt.

Es ist somit nicht mehr erforderlich, den die Pumpe antreibenden Elektromotor mittels eines elektrischen Ein- und Ausschalters an der Spritzdüse ein- und auszuschalten, wenn der Wasserstrahl in Gang gesetzt oder gestopt werden soll.

Statt dessen wird der Wasserstrahl bei laufender Pumpe einfach freigegeben bzw. gestoppt. Ein elektrischer Ein- und Ausschalter unmittelbar an der Spritzdüse ist somit nicht mehr erforderlich. Es genügt, wenn das Wasser an der Spritzdüse abgesperrt werden kann.

Des weiteren dient das Überdruckventil auch als Schutz für Überlastung der Pumpe im Falle einer Verstopfung der Spritzdüse oder des zur Spritzdüse führenden Schlauches.

Dies stellt eine Vereinfachung der Konstruktion der Munddusche dar, die auch Kostenvorteile mit sich bringt. Es müssen keine elektrischen Drähte oder dergleichen mehr zur Spritzdüse geführt werden, und es müssen auch keinerlei Vorkehrungen mehr getroffen werden, mit denen der elektrische Ein- und Ausschalter in der Spritzdüse vor eindringendem Wasser geschützt wird. Dieser vereinfachte Aufbau der erfindungsgemäßen Munddusche hat auch Vorteile bei der Herstellung derselben. Insbesondere ist die Herstellung des längeren Schlauches zu der Spritzdüse aufgrund der nicht mehr vorhandenen elektrischen Drähte wesentlich einfacher und auch kostengünstiger.

Ein weiterer Vorteil der Erfindung besteht darin, daß bei abgesperrtem Wasserstrahl das von der Pumpe weiterhin geförderte Wasser über das Überdruckventil zum Einlaß und von dort zurück in den Flüssigkeitsbehälter gelangt. Das Wasser wird also unmittelbar in den Flüssigkeitsbehälter zurückgepumpt. Irgendwelche weiteren Ventile oder Bypass-Schläuche oder dergleichen sind nicht erforderlich. Durch die Zuordnung des Überdruckventils zu dem Einlaßventil wird somit ein einfacher und kostengünstiger Aufbau und eine entsprechende Herstellung der erfindungsgemäßen Munddusche erreicht.

Bei einer vorteilhaften Ausgestaltung der Erfindung ist zum Öffnen und Schließen des Einlaßventils ein Schließteil vorgesehen, das mit einer durchgehenden Öffnung versehen ist, die mit dem Überdruckventil verbunden ist. Das Schließteil liegt an dem Einlaß an und kann auf diese Weise den Einlaß bei der Pumpbewegung des Kolbens verschließen. Bei geschlossenem Überdruckventil fließt kein Wasser durch die durchgehende Öffnung. Nur bei geöffnetem Überdruckventil kann während der Pumpbewegung des Kolbens Wasser vom Pumpenzylinder über das Überdruckventil und über die durchgehende Öffnung zum Einlaß und damit zum Flüssigkeitsbehäter gelangen. Die beschriebene Ausgestaltung hat den Vorteil, daß sie einfach aufgebaut ist, und daß mit diesen einfachen Mitteln das Ziel erreicht wird, daß bei Überdruck das Wasser von dem Pumpenzylinder über das Überdruckventil zum Einlaß abfließen kann.

Bei einer weiteren Ausgestaltung der Erfindung ist das Schließteil halbkugelförmig ausgestaltet, wobei die Pumpe mit einem halbkugelförmig ausgestalteten Innenraum versehen ist, in dem das Schließteil untergebracht ist. Die Halbkugelformen des Schließteils und des Innenraums haben den Vorteil, daß keine Feder oder dergleichen erforderlich ist, um das Schließteil in seinem geschlossenen Zustand gegen den Einlaß zu drücken. Statt dessen ist das halbkugelförmige Schließteil aufgrund seiner Form durch den angreifenden Saug- oder Pumpdruck leicht hin- und herbeweglich. Dies hat zur Folge, daß durch die Saugbewegung des Kolbens das Schließteil von dem Einlaß abgehoben und damit das Einlaßventil geöffnet wird. Dabei ist schon ein geringfügiger Saugdruck ausreichend, der beispielsweise beim Ansaugen von Luft erzeugt wird, wenn noch kein Wasser bis zur Pumpe gelangt ist. Bei der Pumpbewegung des Kolbens hingegen wird das Schließteil von dem Pumpdruck gegen den Einlaß gedrückt, so daß das Einlaßventil geschlossen ist. Durch die beschriebene Ausgestaltung werden also Bauteile eingespart, was zu einem kostengünstigen Aufbau der erfindungsgemäßen Munddusche führt.

Bei einer vorteilhaften Weiterbildung der Erfindung ist das Überdruckventil an dem Schließteil gehalten und dadurch unmittelbar mit der durchgehenden Öffnung des Schließteils verbunden. Das Schließteil des Einlaßventils und das Überdruckventil bilden also eine Einheit. Dies hat den Vorteil, daß das Überdruckventil nahezu keinen zusätzlichen Raum innerhalb der Pumpe erfordert. Das Überdruckventil kann zweckmäßigerweise sogar zumindest teilweise in das Schließteil des Einlaßventils integriert sein. Ein weiterer Vorteil dieser Konstruktion besteht darin, daß die durchgehende Öffnung des Schließteils unmittelbar mit dem Überdruckventil verbunden ist. Besondere Schlauchverbindungen oder dergleichen sind nicht erforderlich. Auch diese Weiterbildung trägt somit zu einem insgesamt einfachen und kostengünstigen Aufbau sowie einer entsprechend vorteilhaften Herstellung der erfindungsgemäßen Munddusche bei.

Besonders zweckmäßig ist es, wenn das Überdruckventil eine Kugel aufweist, die von einer Feder gegen eine Öffnung gedrückt wird, und die bei Überdruck gegen die Federkraft der Feder verschoben werden kann. Dies stellt eine einfachen, aber bewährten und kostengünstigen Aufbau eines Überdruckventils dar, der darüberhinaus besonders gut mit dem Schließteil kombiniert und zumindest teilweise in diesem integriert werden kann.

Bei diesem Aufbau des Überdruckventils kann durch die Federkraft der Feder der Wert des Überdrucks eingestellt werden, bei dem das Überdruckventil öffnet. Damit ist es auf besonders einfache Art und Weise möglich, das Überdruckventil gerade so einzustellen, daß es bei laufender Pumpe und nicht abgesperrtem Wasserstrahl nicht öffnet und damit kein Wasser zum Flüssigkeitsbehälter zurückgepumpt werden kann, während bei gestopptem Wasserstrahl das Überdruckventil öffnet und damit das Wasser wieder zum Flüssigkeitsbehälter zurückgelangt. Diese Einstellung kann durch eine entsprechende Auswahl der Feder des Überdruckventils erreicht werden.

Bei einer vorteilhaften Weiterbildung der Erfindung ist nach dem Auslaß, insbesondere in der Spritzdüse ein Absperrventil vorgesehen. Das Absperrventil dient dem Benutzer dazu, den Wasserstrahl in Gang zu setzen, also "einzuschalten", und danach wieder zu stoppen, also "auszuschalten". Dies geschieht nur durch das Absperren des Wasserzuflußes zu der Spritzdüse bei weiterlaufender Pumpe. Das Absperrventil kann dabei einfach ausgestaltet und damit kostengünstig herstellbar sein.

Des weiteren ist es vorteilhaft, wenn getrennt von der Spritzdüse ein elektrischer Ein- und Ausschalter für die Pumpe vorgesehen ist. Besonders zweckmäßig ist es, wenn der Ein- und Ausschalter für die Pumpe am Gehäuse der Munddusche angeordnet ist. Dies hat den Vorteil, daß die elektrischen Drähte für den elektrischen Ein- und Ausschalter nur über eine kurze Entfernung geführt werden müssen und insbesondere nicht durch den längeren Schlauch zu der Spritzdüse. Ersichtlich stellt auch dies eine Vereinfachung der Konstruktion der erfindungsgemäßen Munddusche dar.

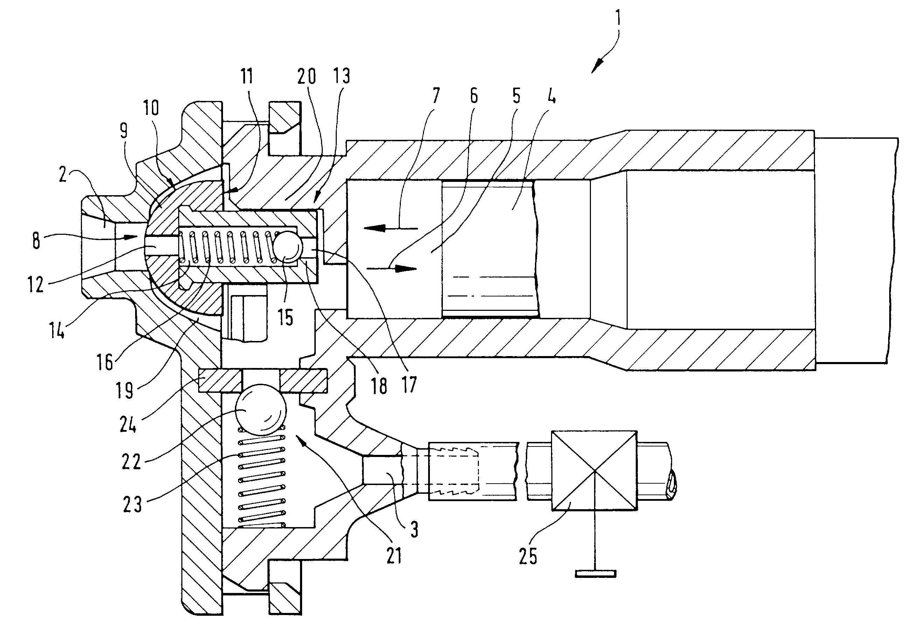

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind. Dabei bilden alle beschriebenen und/oder dargestellten Merkmale für sich oder in beliebiger Kombination den Gegenstand der Erfindung unabhängig von ihrer Zusammenfassung in den Ansprüchen und deren Rückbeziehung.

Die einzige Figur der Zeichnung zeigt eine geschnittene, schematische Darstellung eines Ausführungsbeispiels einer erfindungsgemäßen Pumpe für eine Vorrichtung zum Pflegen und Reinigen der Zähne und des Zahnfleischs.

In der Figur ist eine Pumpe 1 für eine Munddusche dargestellt. Die Munddusche weist einen Flüssigkeitsbehälter auf, der von einem Benutzer mit Wasser gefüllt werden kann. Der Flüssigkeitsbehälter ist beispielsweise über einen Schlauch mit einem Einlaß 2 der Pumpe 1 verbunden. Ein Auslaß 3 der Pumpe 1 ist mit Hilfe eines weiteren, vorzugsweise längeren Schlauchs mit einer Spritzdüse verbunden. Im eingeschalteten Betriebszustand der Munddusche wird das Wasser aus dem Flüssigkeitsbehälter von der Pumpe 1 über den Einlaß 2 angesaugt und über den Auslaß 3 zu der Spritzdüse gepumpt. Der von der Spritzdüse erzeugte Wasserstrahl kann von dem Benutzer zur Pflege und Reinigung der Zähne und des Zahnfleischs benutzt werden.

Die Pumpe 1 weist einen Elektromotor auf, dessen Antriebswelle über eine exzentrische Zahnradanordnung und ein Pleuel mit einem zylindrischen Kolben 4 gekoppelt ist, der in einem Pumpenzylinder 5 untergebracht ist. Im eingeschalteten Betriebszustand der Munddusche wird die Rotationsbewegung der Antriebswelle des Elektromotors mittels der exzentrischen Zahnradanordnung und über das Pleuel in eine Hin- und Herbewegung des Kolbens 4 umgewandelt. Diese Bewegung ist in der Figur mit Hilfe der Pfeile 6 und 7 dargestellt, wobei sich die Bewegung des Kolbens 4 aus der Saugbewegung 6 und der Pumpbewegung 7 zusammensetzt.

Der Pumpenzylinder 5 ist über ein Einlaßventil 8 mit dem Einlaß 2 verbunden. Das Einlaßventil 8 weist ein Schließteil 9 auf, das halbkugelförmig ausgebildet ist, und das damit eine gekrümmte Oberfläche 10 und eine ebene Oberfläche 11 besitzt. In dem Schließteil 9 ist eine durchgehende Öffnung 12 enthalten, die sich von der gekrümmten Oberfläche 10 zu der ebenen Oberfläche 11 erstreckt, und die senkrecht auf dem Mittelpunkt der ebenen Oberfläche 11 angeordnet ist. Das Schließteil 9 dient zum Öffnen und Schließen des Einlaßes 2.

Im Bereich der ebenen Oberfläche 11 ist das Schießteil 9 mit einem Überdruckventil 13 verbunden. Insbesondere ist das Überdruckventil 13 in das Schließteil 9 des Einlaßventils 8 eingeschnappt oder eingeschraubt. Das Überdruckventil 13 ist zylindrisch ausgestaltet und besitzt eine zentrale, durchgehende Bohrung 14, die koaxial zur Öffnung 12 des Schließteils 9 angeordnet ist. Die Öffnung 12 des Schließteils 9 geht somit unmittelbar in die Bohrung 14 des Überdruckventils 13 über.

In der Bohrung 14 des Überdruckventils 13 sind eine Kugel 15 und eine Feder 16 untergebracht. Die Feder 16 ist derart angeordnet, daß sie die Kugel 15 gegen einen nach innen ragenden, eine Öffnung 17 bildenden Vorsprung 18 am freien Ende des Überdruckventils 13 drückt. In diesem in der Figur dargestellten Zustand liegt die Kugel 15 an der Öffnung 17 an, so daß das Überdruckventil 13 geschlossen ist.

Die Pumpe 1 weist einen Innenraum 19 auf, der halbkugelförmig ausgebildet ist, wobei die Krümmung des Innenraums 19 etwas größer ist als die Krümmung der gekrümmten Oberfläche 10 des Schließteils 9. In dem Innenraum 19 ist das Schließteil 9 mit seiner gekrümmten Oberfläche 10 untergebracht.

Des weiteren weist die Pumpe 1 Wände 20 oder Vorsprünge oder dergleichen auf, die dazu dienen, das Schließteil 9 mit dem daran gehaltenen Überdruckventil 13 derart zu führen, daß eine Hin- und Herbewegung in Richtung der durchgehenden Öffnung 10 des Schließteils 9 möglich ist. In dem in der Figur dargestellten Zustand liegt die gekrümmte Oberfläche 10 des Schließteils 9 an dem Einlaß 2 an, so daß nur eine Verbindung besteht zwischen dem Einlaß 2 und der Öffnung 12 des Schließteils 9 bzw. der Bohrung 14 des geschlossenen Überdruckventils 13, jedoch nicht zu dem Innenraum 19 oder dem Pumpenzylinder 5. In dem in der Figur nicht dargestellten Zustand liegt das Schließteil 9 nicht an dem Einlaß 2 an und es besteht eine Verbindung von dem Einlaß 2 vorbei an dem Schließteil 9 zum Pumpenzylinder 5 der Pumpe 1.

Der Pumpenzylinder 5 ist des weiteren über ein Auslaßventil 21 mit dem Auslaß 3 verbunden. Das Auslaßventil 21 weist eine Kugel 22 auf, die von einer Feder 23 gegen eine Lochscheibe 24 gedrückt wird und diese verschließt. In diesem in der Figur dargestellten Zustand ist das Auslaßventil 21 geschlossen.

Im eingeschalteten Betriebszustand der Munddusche wird durch die Saugbewegung des Kolbens 4 in Richtung des Pfeils 6 das Einlaßventil 8 geöffnet. Dies geschieht dadurch, daß durch die Saugbewegung 6 des Kolbens 4 das Schließteil 9 des Einlaßventils 8 zusammen mit dem Überdruckventil 13 aufgrund des erzeugten Saugdrucks sowie der entstehenden Strömung im Innern der Pumpe 1 in dieselbe Richtung wie der Kolben 4 verschoben wird. Es kann somit Wasser vom Einlaß 2 an dem Schließteil 9 vorbei in den Innenraum 19 und von dort in den Pumpenzylinder 5 gelangen. Bei dieser Saugbewegung 6 des Kolbens 4 ist das Überdruckventil 13 geschlossen, da die Kugel 15 aufgrund der Federkraft der Feder 16 gegen die Öffnung 17 gedrückt wird und diese verschließt. Ebenfalls ist bei der Saugbewegung 6 des Kolbens 4 das Auslaßventil 21 geschlossen, da die Kugel 22 durch die Federkraft der Feder 23 gegen die Lochscheibe 24 gedrückt wird und diese verschließt.

Dies hat zur Folge, daß während der Saugbewegung 6 des Kolbens 4 Wasser vom Einlaß 2 über das Einlaßventil 8 in den Pumpenzylinder 5 angesaugt wird, so daß am Ende der Saugbewegung 6 des Kolbens 4 der Pumpenzylinder 5 mit Wasser gefüllt ist.

Durch die nachfolgende Pumpbewegung des Kolbens in Richtung des Pfeils 7 wird das Auslaßventil 21 geöffnet. Es wird also die Kugel 22 durch den von dem Kolben 4 erzeugten Pumpdruck gegen die Federkraft der Feder 23 geringfügig verschoben, so daß die Kugel 22 nicht mehr an der Lochscheibe 24 anliegt und diese somit nicht mehr verschließt. Dies hat zur Folge, daß das in dem Pumpenzylinder 5 befindliche Wasser über das Auslaßventil 21 zum Auslaß 3 gepumpt wird.

Zu Beginn dieser Pumpbewegung des Kolbens 4 in Richtung des Pfeils 7 wird das Einlaßventil 8 geschlossen, da das Schließteil 9 durch die Bewegung des Kolbens 4 und den dadurch erzeugten Pumpdruck sowie die entstehende Strömung im Innern der Pumpe 1 in dieselbe Richtung wie der Kolben 4 verschoben wird. Das Schließteil 9 liegt somit am Einlaß 2 an und verschließt diesen, so daß kein Wasser an dem Schließteil 9 vorbei zum Einlaß 2 fließen kann.

Des weiteren bleibt auch während der Pumpbewegung 7 des Kolbens 4 das Überdruckventil 13 geschlossen. Dies wird dadurch erreicht, daß die Federkraft der Feder 16 so groß gewählt wird, daß die Kugel 15 von dem bei der Pumpbewegung 7 entstehenden Druck nicht gegen die Feder 16 verschoben werden kann.

Insgesamt wird somit während der Pumpbewegung 7 des Kolbens 4 Wasser nur zum Auslaß 3 und nicht zurück zum Einlaß 2 gefördert. Am Ende der Pumpbewegung des Kolbens 4 ist im wesentlichen kein Wasser mehr im Pumpenzylinder 5.

Innerhalb der Spritzdüse ist ein Absperrventil 25 vorgesehen, das über den längeren Schlauch mit dem Auslaß 3 der Pumpe 1 verbunden ist. Das Absperrventil 25 ist dazu geeignet, den von der Pumpe 1 erzeugten Wasserzufluß zu der Spritzdüse zu unterbrechen bzw. durchzulassen. Im einfachsten Fall kann es sich bei dem Absperrventil 25 um eine Klemmvorrichtung oder derlgeichen handeln, mit der der das Wasser führende Schlauch derart zusammengedrückt wird, daß kein Wasser mehr durchfließen und damit aus der Spritzdüse austreten kann.

Bei der bisherigen Beschreibung der Funktionsweise der Munddusche nach der Figur ist davon ausgegangen worden, daß das Absperrventil 25 geöffnet ist.

Wird jedoch im eingeschalteten Betriebszustand der Pumpe 1 das Absperrventil 25 geschlossen, so hat dies zur Folge, daß kein Wasser mehr aus der Spritzdüse austreten kann. Das Wasser kann also während der Pumpbewegung 7 des Kolbens 4 nicht mehr aus dem Pumpenzylinder 5 über den Auslaß 3 zur Spritzdüse gepumpt werden. Dies bewirkt, daß während der Pumpbewegung 7 der Druck im Innern der Pumpe 1 und insbesondere im Pumpenzylinder 5 sich erhöht. Überschreitet dieser Pumpdruck einen bestimmten Wert, so öffnet das Überdruckventil 13. Die Kugel 15 wird also aufgrund des Pumpdrucks gegen die Federkraft der Feder 16 verschoben, und durch die von dem Vorsprung 18 gebildete Öffnung 17 kann Wasser zum Einlaß 2 abfließen. Es wird also über die Öffnung 17 der erhöhte Druck in dem Pumpenzylinder 5 abgebaut. Das Überdruckventil 13 bleibt dabei so lange geöffnet, bis der Druck im Innern der Pumpe 1 auf den bestimmten Wert wieder abgesunken ist. Dieser Wert entspricht der Federkraft der Feder 16 und kann somit durch eine entsprechende Auswahl der Feder 16 eingestellt werden.

Mit Hilfe des Absperrventils 25 wird also das Wasser in der Spritzdüse bei weiterlaufender Pumpe 1 abgesperrt. Das durch die weiterlaufende Pumpe 1 geförderte Wasser wird über das Überdruckventil 13 zum Einlaß 2 und damit zurück zum Flüssigkeitsbehälter gepumpt. Eine Überlastung des die Pumpe 1 antreibenden Elektromotors oder ein zu hoher Druck im Innern der Pumpe 1 wird durch das Überdruckventil 13 vermieden.

Der elektrische Ein- und Ausschalter für den Elektromotor der Pumpe 1 ist getrennt von der Spritzdüse vorgesehen, und zwar insbesondere an dem Gehäuse der Munddsuche, in dem die Pumpe 1 untergebracht ist.

## Patentansprüche

1. Vorrichtung zum Pflegen und Reinigen der Zähne und des Zahnfleischs mit einer von einem Elektromotor antreibbaren Pumpe (1), die einen insbesondere mit einem Flüssigkeitsbehälter vebundenen und mit einem Einlaßventil (8) versehenen Einlaß (2), einen insbesondere mit einer Spritzdüse verbundenen und mit einem Auslaßventil (21) versehenen Auslaß (3) sowie einen mit dem Einlaß (2) und dem Auslaß (3) verbundenen Pumpenzylinder (5) aufweist, in dem ein Kolben (4) hin- und herbewegbar ist, wodurch Flüssigkeit von dem Einlaß (2) in den Pumpenzylinder (5) angesaugt und danach die angesaugte Flüssigkeit aus dem Pumpenzylinder (5) zu dem Auslaß (3) gefördert werden kann, **dadurch gekennzeichnet,** daß das Einlaßventil (8 ein Überdruckventil (13) aufweist, über das bei Überdruck Flüssigkeit von dem Pumpenzylinder (5) zum Einlaß (2) gelangen kann.

2. Vorrichtung nach Patentanspruch 1, **dadurch gekennzeichnet**, daß zum Öffnen und Schließen des Einlaßventils (8) ein Schließteil (9) vorgesehen ist, das mit einer durchgehenden Öffnung (12) versehen ist, die mit dem Überdruckventil (13) verbunden ist.

3. Vorrichtung nach Patentanspruch 2, **dadurch gekennzeichnet,** daß das Schließteil (9) halbkugelförmig ausgestaltet ist, und daß die Pumpe (1) mit einem halbkugelförmig ausgestalteten Innenraum (19) versehen ist, in dem das Schließteil (9) untergebracht ist.

4. Vorrichtung nach einem der Patentansprüche 2 oder 3, **dadurch gekennzeichnet,** daß das Überdruckventil (13) an dem Schließteil (9) gehalten und dadurch unmittelbar mit der durchgehenden Öffnung (12) des Schließteils (9) verbunden ist.

5. Vorrichtung nach einem der vorhergehenden Patentansprüche, **dadurch gekennzeichnet,** daß das Überdruckventil (13) eine Kugel (15) aufweist, die von einer Feder (16) gegen eine Öffnung (17) gedrückt wird, und die bei Überdruck gegen die Federkraft der Feder (16) verschoben werden kann.

6. Vorrichtung nach Patentanspruch 5, **dadurch gekennzeichnet,** daß durch die Federkraft der Feder (16) der Wert des Überdrucks eingestellt werden kann, bei dem das Überdruckventil (13) öffnet.

7. Vorrichtung nach einem der vorhergehenden Patentansprüche, **dadurch gekennzeichnet,** daß nach dem Auslaß (3), insbesondere in der Spritzdüse ein Absperrventil (25) vorgesehen ist.

8. Vorrichtung nach einem der vorhergehenden Patentansprüche, **dadurch gekennzeichnet,** daß getrennt von der Spritzdüse ein elektrischer Ein- und Ausschalter für die Pumpe (1) vorgesehen ist.
